# EUROPÄISCHE PATENTANMELDUNG

(11) **EP 3 819 281 A1**
(43) Veröffentlichungstag der Anmeldung: **12.05.2021**
(21) Anmeldenummer: 20206367.3
(22) Anmeldetag: 09.11.2020
(51) Int. Cl.: C04B 41/86, C04B 33/04, B01J 35/00

(54) **VERWENDUNG VON TITANVERBINDUNGEN**

(30) Priorität: 08.11.2019 DE 102019007756
(71) Anmelder: n-tec GmbH, 84051 Altheim (DE)
(72) Erfinder: INTERWIES, Jan, 84051 Altheim (DE)
(74) Vertreter: Tomerius, Isabel

(57) **Zusammenfassung**

Die vorliegende Erfindung betrifft allgemein die Verwendung wenigstens einer Verbindung aus der Gruppe eines Titan enthaltenden Minerals, eines festen Titanats, Ti-Silikats, Zirkonats, Zirkonsilikats, Aluminiumtitanats, Zirkontitanats und Zirkonalumotitanats, oder einer ausgehend von diesen hergestellten festen Zusammensetzung oder Mischung derselben zum Erzeugen katalytisch aktiver Oberflächen sowie aus dieser Verwendung hervorgehende Produkte.

## Beschreibung

Die vorliegende Erfindung betrifft allgemein die Verwendung wenigstens einer Verbindung aus der Gruppe eines Titan enthaltenden Minerals, eines festen Titanats, Ti-Silikats, Zirkonats, Zirkonsilikats, Aluminiumtitanats, Zirkontitanats und Zirkonalumotitanats oder einer ausgehend von diesen hergestellten festen Zusammensetzung oder Mischung derselben zum Erzeugen katalytisch aktiver Oberflächen sowie aus dieser Verwendung hervorgehende Produkte.

Katalytisch aktive Oberflächen gewinnen zunehmend an Bedeutung und insbesondere auf dem Gebiet der Verarbeitung und Veredelung von Glas, Keramikerzeugnissen, Steinzeug oder Steingut gibt es ein stetes Streben zur Verbesserung der Materialien hinsichtlich verschiedenster Eigenschaften wie beispielsweise Schutz vor aggressiven Umwelteinflüssen, Schutz vor Chemikalieneinflüssen, Wasserabweisung, Schmutzabweisung, Kalkabweisung oder leichte Reinigbarkeit von Oberflächen, um nur einige zu nennen. Darüber hinaus wird an der Verbesserung der photokatalytischen Aktivität von Oberflächen und der Funktionalisierung der Oberflächen dieser Erzeugnisse gearbeitet, um so Materialien mit bisher nicht zugänglichen Eigenschaften zu erhalten oder für neue Verwendungen zugänglich zu machen.

Grundsätzlich besteht im Stand der Technik auf dem vorliegenden Gebiet Bedarf an der Verbesserung von allgemein katalytischen Eigenschaften, wie sie mit dem Methylenblau-Test bestimmt werden, insbesondere auch katalytische Eigenschaften, die eine Reduktion von Schadstoffen wie NOₓ oder CO und CO₂, Methan und andere organische Schadstoffe wie zum Beispiel Formaldehyd betreffen, photokatalytischen Eigenschaften, an der Schaffung neuer Funktionalitäten der genannten Oberflächen und auch an der Bereitstellung von Materialien zum Herstellen von Oberflächen mit entsprechenden katalytischen und/oder photokatalytischen Eigenschaften.

In der deutschen Patentanmeldung mit der Anmeldenummer DE 10 2019 006 135 vom selben Anmelder ist ein Verfahren zum Erzeugen katalytisch aktiver Oberflächen offenbart, bei dem eine katalytisch aktive Oberfläche ausgehend von einer wenigstens in einer wässrigen oder alkoholischen, Ti enthaltenden Lösung erzeugt wird. Obwohl dieses Verfahren bereits sehr gute Ergebnisse hinsichtlich katalytischer und insbesondere auch photokatalytischer Aktivität liefert, unterliegt dieses Verfahren wegen des Erfordernisses der Lösungsherstellung gewissen Einschränkungen und ist daher noch verbesserungsfähig. Insbesondere besteht grundsätzlich Bedarf an weiteren, besonders wirtschaftlichen und/oder vereinfachten Verfahren.

Die DE 10 2007 043 375 A1 offenbart die Herstellung von photokatalytisch aktiven Engoben und Glasuren von Dachziegeln, wobei Interferenzpigmente mit einer Schicht von TiO₂ einer Grundmasse für eine Engobe oder Glasur beigemischt werden. Dieses Verfahren ist aufwendig und kostenintensiv, da die verwendeten Interferenzpigmente nicht natürlich vorkommen und erst hergestellt werden müssen.

Es ist Aufgabe der vorliegenden Erfindung dem Fachmann Mittel an die Hand zu geben, um wenigstens einen Teil der aus dem Stand der Technik bekannten Probleme zu überwinden.

Diese Aufgabe wird durch die Verwendung nach Anspruch 1 und den Produkten des Anspruchs 12 gelöst. Vorteilhafte Ausgestaltungen sind Gegenstand der ebenfalls beigefügten, jeweils direkt oder indirekt rückbezogenen Ansprüche.

Die Erfindung betrifft insbesondere die Verwendung wenigstens einer Verbindung aus der Gruppe eines Titan enthaltenden Minerals, eines festen Titanats, Ti-Silikats, Zirkonats, Zirkonsilikats, Aluminiumtitanats, Zirkontitanats und Zirkonalumotitanats oder einer ausgehend von diesen hergestellten festen Zusammensetzung zum Erzeugen katalytisch aktiver Oberflächen. Insbesondere betrifft die Erfindung die Verwendung der genannten Verbindung und Verbindungen als Feststoff und in Pulverform.

Ausgehend von den Untersuchungen in Zusammenhang dem Erzeugen von katalytischen Oberflächen und der daraus resultierenden DE 10 2019 006 135 wurde vorliegend und überraschend gefunden, dass katalytisch und photokatalytisch aktive Oberflächen auch ausgehend von festen Ausgangsstoffen und ohne selbige umständlich zu lösen kostengünstig und mit geringem verfahrenstechnischen Aufwand erhältlich sind.

In der einfachsten Ausgestaltung der vorliegenden Erfindung wird einer Verbindung aus der Gruppe eines Titan enthaltenden Minerals, eines festen Titanats, Ti-Silikats, Zirkonats, Zirkonsilikats, Aluminiumtitanats, Zirkontitanats und Zirkonalumotitanats zu einer keramischen Grundzusammensetzung, einer Grundzusammensetzung für eine Glasur, Engobe oder Emaille, oder einer Grundzusammensetzung für ein Glas gegeben und nachfolgend wie üblich bei der Verarbeitung dieser Zusammensetzungen, ohne weitere verfahrenstechnische Veränderungen verfahren.

Der Begriff Grundzusammensetzung bezeichnet im Zusammenhang mit der vorliegenden Erfindung allgemein keramische, Glasur-, Engoben-, Emaille-, Druckfarben und Glaszusammensetzungen wie sie im Stand der Technik üblich und verbreitet sind.

Auf diese Weise ist es erstmals gelungen eine katalytisch aktive Oberfläche, insbesondere eine photokatalytisch aktive Oberfläche, unter Vermeiden des Einsatzes oder durch eine deutliche Reduzierung von TiO₂ in feinpartikulärer Form, ausgehend von wenigstens einer Verbindung aus der Gruppe eines Titan enthaltenden Minerals, eines festen Titanats, Ti-Silikats, Zirkonats, Zirkonsilikats, Aluminiumtitanats, Zirkontitanats und Zirkonalumotitanats zu erzeugen, indem einer üblichen Ton-, Lehm- , Steinzeug-, Steingut- oder allgemein einer Keramikzusammensetzung oder einer Glasur-, Druckfarben-, Engoben oder Emaille-Zusammensetzung, auch als Grundzusammensetzung bezeichnet, eine entsprechende Verbindung als Feststoff zugesetzt und mit der Zusammensetzung vermischt wird, wobei die so modifizierte Grundzusammensetzung dann auf herkömmliche Weise weiterverarbeitet wird, ohne dass weiter in das Verfahren eingegriffen werden muss.

Eine solche Vorgehensweise ist sehr flexibel, weil praktisch jede Grundzusammensetzung einer Verbindung aus der Gruppe eines Titan enthaltenden Minerals, eines festen Titanats, Ti-Silikats, Zirkonats, Zirkonsilikats, Aluminiumtitanats, Zirkontitanats und Zirkonalumotitanats zum Erhalt von Produkten mit katalytisch aktiven, insbesondere photokatalytisch aktiven, Oberflächen modifiziert werden kann. So kann beispielsweise eine Zusammensetzung zum Herstellen eines keramischen Grünlings auf diese Weise modifiziert werden und der aus dieser modifizierten Zusammensetzung hergestellte Grünling dann wie üblich gebrannt werden. Dabei ist in einer anderen unabhängigen Ausgestaltung möglich, eine Glasur-, Druckfarben-, Engoben oder Emaille-Zusammensetzung auf die gleiche Weise zu modifizieren und dann auf ein entsprechendes Substrat aufzubringen, wobei eine so modifizierte Glasur-, Druckfarben- oder Engobenzusammensetzung auf einen keramischen Grünling oder auf eine bereits gebrannte Keramik aufgebracht werden kann. Gleiches gilt selbstverständlich auch für Steinzeug und Steingut. Auch entsprechende Glaszusammensetzungen lassen sich auf die gleiche Weise modifizieren und liefern ebenfalls katalytisch und/oder photokatalytisch aktive Oberflächen, wobei besonders überraschend festgestellt wurde, dass sich die optischen Eigenschaften der so erhaltenen, katalytisch aktiven Produkte nicht erkennbar von entsprechenden, nicht modifizierten Produkten unterscheiden und insbesondere keine Beeinträchtigungen der optischen Eigenschaften zu verzeichnen sind.

Dabei ist es bevorzugt, wenn das Titanat aus der Gruppe, umfassend Erdalkalititanate wie Bariumtitanat (BaTiO₃), Barium-Strontium-Titanat, Strontiumtitanat (SrTiO₃), Calciumtitanat (CaTiO₃), Magnesiumtitanat (MgTiO₃) und Calcium-Kupfer-Titanat, Blei-Zirkonat-Titanat, Bleititanat (PbTiO₃), Kaliumtitanat (K₂Ti₆O₁₃), Lanthantitanat, Certitanat, Aluminiumtitanat (Al₂TiO₅), Cobalttitanat (CoTiO₃), Bismuttitanat (Bi₂Ti₂O₇), Eisentitanat (FeTiO₃), Zirkoniumtitanat (ZrTiO₄), Mangantitanat, Zinktitanat, Nickeltitanat, Lithiumhexafluorotitanat Li₂[TiF₆], Kaliumhexafluorotitanat K₂[TiF₆], natürlichen Titanmineralen wie aus der Klasse der Oxide und Hydroxide, Armalcolit (Mg,Fe²⁺,Al)(Ti²⁺,Fe³⁺)₂O₅, Cafetit CaTi₂O₅·H₂O oder (Ca,Mg)(Fe³⁺,Al)₂Ti₄O₁₂·4H₂O, Carmeltazit ZrAl₂Ti₄O₁₁, Henrymeyerit Ba(Ti⁴⁺₇Fe²⁺)O₁₆, Hibonit (Ca,Ce)(Mg,Fe²⁺)Al₁₀(Ti⁴⁺,Al)O₁₉, Ilmenit FeTiO₃, Kassit CaTi₂(OH)₂O₄ oder CaTi₂O₄(OH)₂, Kleberit Fe³⁺Ti₆O₁₁(OH)₅, Perowskit CaTiO_{3,}, Barioperowskit, Pseudobrookit [(Fe³⁺)₂Ti]O₅, Pseudorutil Fe₂³⁺Ti₃⁴⁺O_{9,}, Quandilit (Mg,Fe³⁺,Fe²⁺)₂(Ti⁴⁺,Fe³⁺,Al)O₄ oder (Mg,Fe²⁺)₂(Ti,Fe³⁺,Al)O₄ oder Mg₂Ti⁴⁺O₄, Ulvit Fe²⁺₂Ti⁴⁺O₄, der Klasse Silikate und Germanate, Aenigmatit Na₂(Fe²⁺₄Ti)Fe²⁺[O₂|Si₆O₁₈], Astrophyllit K₂Na(Fe²⁺Mn²⁺)₇Ti₂[O₂|F|(OH)₄|Si₈O₂₄] bzw. K₂NaFe²⁺₇Ti₂Si₈O₂₆(OH)₄F, Benitoit BaTi[Si₃O₉], Berezanskit K Ti⁴⁺₂Li₃Si₁₂O₃₀, Biotit K(Mg,Fe²⁺,Mn²⁺)₃[(OH,F)₂ und (Al,Fe³⁺,Ti³⁺)Si₃O₁₀], Delendeit Ba₂Na₂Ti₃(Si₂O₇)₂O₂(OH)₂·2H₂O oder (Na,K)₃(Ba,Ca)₄(Ti,Fe,Al)₆H₂[(OH)₃|Si₂O₇]₄, Götzenit NaCa₆Ti(Si₂O₇)₂OF₃, Grossmanit CaTi³⁺AlSiO₆, Hutcheonit Ca₃Ti₂Al₂SiO₁₂, Koashvit Na₆CaTiSi₆O₁₈ oder Na₆(Ca,Mn,Fe³⁺)(Ti,Fe³⁺)[Si₆O₁₈]-oder Na₆(Ca,Mn²⁺)(Fe³⁺Ti)[Si₆O₁₈]·H₂O, Lorenzenit Na₂Ti₂[O₃| Si₂O₆], Morimotoit Ca₃TiFe²⁺Si₃O₁₂, Neptunit KNa₂Li(Fe²⁺)₂Ti₂Si₈O₂₄, Rait Na₃Mn²⁺₃Ti⁴⁺_{0,25}[OH| Si₄O₁₀]₂ x 10 H₂O, Rengeit Sr₄Ti₄ZrO₈[Si₂O₇]₂, Rhönit Ca₂(Mg,Fe²⁺)₄TiFe³⁺[O₂|Al₃Si₃O₁₈], Schorlomit Ca₃Ti₂Fe³⁺₂SiO₁₂, Titanit CaTi[O|SiO₄], Tranquillityit Fe₈²⁺Ti₃(Zr,Y)₂[O₁₂|(SiO₄)₃], titanhaltiger Vesuvianit (Ca,Na)₁₉(Al,Mg,Fe)₁₃(SiO₄)₁₀(Si₂O₇)₄(OH,F,O)₁₀, Wiluit Ca₁₉(Al,Mg,Fe,Ti)i₃B_{<3}[(O,OH)₁₀| (siO₄)₁₀|(Si₂O₇)₄], Zorit Na₆Ti₅[(O,OH)₅|(Si₆O₁₇)₂]·11H₂O, der Klasse der Carbonate, Sabinait Na₄Zr₂Ti[O|CO₃]₄, sowie Mazedonit, Geikielit, Pyrophanit und Tausonit oder Mischungen derselben und das Zirkonat aus der Blei-Zirkonat-Titanat, Na₂ZrO₃, Ca₂ZrO₄ oder Mischungen derselben ausgewählt ist, weil diese Verbindung zumindest teilweise gut und kostengünstig erhältlich sind oder bereits über katalytische und/oder photokatalytische Eigenschaften verfügen oder diese als Vorstufen dienen und während des Brennprozesses katalytische und/oder photokatalytische Eigenschaften in der Schmelze und/oder Abkühlphase ausbilden.

In diesem Zusammenhang ist von besonderer Bedeutung, dass im Gegensatz zu der bereits erwähnten DE 10 2019 006 135 bereits komplexe Titanate, Ti-Silikate,Zirkonate,Zirkonsilikate, Aluminiumtitanate, Aluminate bzw. Zirkonalumotitanate oder einer Mischung derselben eingesetzt werden und diese unter dem verfahrensbedingten Temperatureinfluss durch Schmelzphasen- und/ oder Sinterreaktionen anscheinend zu den katalytisch aktiven, komplexen Spezies umgebaut werden und nicht aus kleineren Moleküleinheiten aufgebaut werden müssen. Dabei entstehen allgemein komplexe Oxide, Titanate oder Zirkonate wie beipielsweise BaTi₄O₉, BaTi₈O₁₆, Ba₂Ti₆O₁₃, Ba₃TiAl₁₀O₂₀, BaTiAl₆O₁₂, FeAlTiO₃, Fe₂(TiO₅), Ba₅Fe₄Ti₁₀O₃₁, Ba₂(Fe)₂Ti₄O₃₁), Zn₂Ti₃O₈, Ba₂ZnTi₅O₁₃, Cu₃TiO₄.Al₂TiO₅.Al₂Ti₇O₁₅, Ba₄Ti₁₃O₃₀, BaZnTiO₃, Ba₁₁Fe₈Ti_{g}O₄₁, Na₄TiO₄, Na₂Ti₁₂O₂₅, NaKTiO₃, La₄Ti(Si₂O₇)₂(Ti₈O₁₆), Ni₅TiO₄(BO₃)₂, Ba₆Ti₁₇O₄₀, Na₂Ti₇O₁₅,Na₂Ti₇O₁₅, Na₄Mn₄Ti₅O₁₈, BaTi₂Fe₄O₁₁, NaTi₂Al₅O₁₂, Murmanite (Na-Ti-Silikat), Pigeoite, Ti₆O₁₁, Ti₇O₁₃, Ti₈O₁₅, Ti₉O₁₇, Na₂Ti₂Si₂O₉, Na₂(TiO)SiO₄, Na₃Mg₃Ti_{0,25}[OHSi₄O₁₀]₂ x 10 H₂O, TiSi₂, Zeolite ETS-10, titanhaltige Zeolite, titanlose Zeolite, Na₂Ti₂(Si₂O₇)O₂ x 2 H₂O, (Mg,Fe,Ca)₂[Si₂O₆], NiTiSi, CaZrTi₂O₇, K₂Na(Fe²⁺,Mn²⁺)₇Ti₂[O₂]F| (OH)₄|Si₃O₂₄], K₂NaFe²⁺₇Ti₂Si₈O₂₆(OH)₄, Fe₈²⁺Ti₃(Zr,Y)₂[O₁₂|(SiO₄)₃], die sämtlich mittels EBSD-Untersuchungen von erfindungsgemäß hergestellten Produkten an der Oberfläche derselben gefunden wurden.

Ein weiterer Vorteil der erfindungsgemäßen Verwendung liegt in der Zusammensetzung der Ausgangsverbindungen, da, abhängig von der Zusammensetzung, weitere vorteilhafte Eigenschaften im modifizierten Produkt erhältlich sind. Wenn in den Ausgangsverbindungen zum Beispiel antimikrobiell, das heisst antibakteriell, antimykotisch, antiviral oder algizid wirkende Kationen enthalten sind wie Fe, Cu, Ni oder dergleichen und in das Kristallgitter der entstehenden komplexen Oxide, Titanate und Zirkonate eingebaut werden, zeigen die Oberflächen der erfindungsgemäß modifizierten Produkte eben solche Eigenschaften. Ferner ermöglicht der Zusatz von Al oder Zr enthaltenden Verbindungen Steigerungen in der Oberflächenhärte und ein Einsatz von Verbindungen mit Elementen, die als Flussmittel wirken, ermöglichen den Erhalt glatterer Oberflächen und haben zumindest teilweise einen positiven Einfluss auf die stattfindenden Schmelzphasen-, Kristallisations- und/oder Sinterreaktionen. Bei einer unglasierten Keramik liegt beispielsweise eine verhältnismässig raue Oberfläche vor, die durch Zugabe von komplexen Oxiden, Titanaten, Zirkonaten und Aluminaten oder Mischung derselben zu einer Grundzusammensetzung für einen keramischen Grünling ändert sich durch den keramischen Brand die Struktur der Oberfläche. Sie verschmilzt mehr und ist glatter, jedoch bilden sich feine Kristallstrukturen welche deutlicher härter sind und somit die Oberflächenhärte im Vergleich zur unmodifizierten Oberfläche erhöht. Darüber hinaus zeigen die erhaltenen Strukturen wie Zeolithe eine erhöhte Bindungsneigung zu unterschiedlichen Molekülen wie zum O₂, CO, NOₓ, Methan oder Formaldehyd, wodurch photokatalytische Abbauprozesse durch verstärkte Anlagerung solcher Spezies noch verstärkt werden. Zeolithe wirken dabei positiv durch ihre Struktur welche eine erhöhte Aufnahme von gasförmigen Molekülen begünstigt.

In einer unabhängigen Ausgestaltung der vorliegenden Erfindung wird wenigstens eine Verbindung aus der Gruppe eines Titan enthaltenden Minerals, eines festen Titanats, Ti-Silikats, Zirkonats, Zirkonsilikats, Aluminiumtitanats, Zirkontitanats und Zirkonalumotitanats oder eine ausgehend von diesen hergestellten festen Zusammensetzung zunächst zu einer entsprechenden Fritte verarbeitet, dann in der Regel gemahlen und in Form einer entsprechenden Fritte oder einer entsprechenden bariumhaltigen Fritte eingesetzt. Dies ist eine im Bereich des Herstellens von Keramik und Glasuren übliche Verfahrensweise und lässt sich vorteilhafter Weise ohne großen Aufwand, ausschließlich durch Zugabe der entsprechenden Verbindungen, mit der erfindungsgemäßen Verwendung kombinieren.

Gänzlich unerwartet war die erhaltenen katalytische und/oder photokatalytische Aktivität der durch die erfindungsgemäße Verwendung erhaltenen Oberflächen, da Verbindungen verwendet werden, die auf dem Gebiet der Keramik, Glasuren, Druckfarben, Engoben, Emaillien und von Glas eher unüblich sind oder gar nicht in diesem Bereich verwendet werden.

Die Verwendung von pulverförmigen TiO₂ ist dahingegend nachteilig, da es unter dem Verdacht der kancerogenen Wirkung steht und unter den üblichen Verfahrensbedingungen, bei denen häufig Temperaturen von mehr als 1000 °C erreicht werden, aufgrund seiner bei 900 °C beginnenden Umwandlung in Rutil seine photokatalytische Aktivität verliert. Dies ist bei der erfindungsgemäßen Verwendung von Komplexen Molekülen die die photokatalytische oder katalytische Wirkung zum großen Teil in der Schmelze ausbilden nicht der Fall. Daher wird versucht auf TiO₂ weitestgehend und wenn möglich zu verzichten.

In einer besonderen und unabhängigen Ausgestaltung der Erfindung wird außer der erfindungsgemäß eingesetzten Verbindung der Zusammensetzung wenigstens ein weiterer anorganischer Feststoff hinzugefügt und mit der Zusammensetzung vermischt. Dieser weitere anorganische Feststoff enthält bevorzugt ein oder mehrere Elemente der B, Mg, Al, Si, Fe, Ni, Cu, Zn, Ba und Lanthanoide, Pentlandit und Olivin umfassenden Gruppe, wobei diese üblicherweise als Oxide, Halogenide, insbesondere Chloride, Phosphate, Carbonate, Sulfate oder Nitrate eingesetzt werden, besonders bevorzugt als Oxide, Carbonate, Sulfate oder Chloride.

Sämtliche der zum Modifizieren der genannten Grundzusammensetzungen, das heißt Ton-, Lehm-, Keramik-, Glasur-, Engoben-, Emaille- , Druckfarben- oder Glaszusammensetzungen, eingesetzten Feststoffe wird bevorzugt mit einer mittleren Korngröße D₅₀ im Bereich von 1 nm bis 500 µm eingesetzt und erforderlichenfalls vor dem Verwenden zum durch Mahlen ausreichend zerkleinert. Dabei ist die Korngröße aber von untergeordneter Bedeutung und dient eher dem Erleichtern des Aufschmelzens oder einer homogeneren und/oder feineren Verteilug und damit dem zügigen Ausbilden der katalytisch aktiven Oberfläche. Als Grundregel werden die erfindungsgemäß verwendeten Zusätze in einer Korngröße eingesetzt, die der mittleren Korngröße der zu modifizierenden Grundzusammensetzung entspricht, wobei Abweichungen aber möglich sind. Dabei führt die erfindungsgemäße Verwendung der hierin genannten Verbindungen in fester, pulverförmiger Form zu keinen oder praktisch nicht wahrnehmbaren Veränderungen der optischen Eigenschaften und Erscheinung der Oberflächen der erfindungsgemäss erhaltenen Produkte.

In einer anderen Ausgestaltung der vorliegenden Erfindung wird die Zusammensetzung für die Verwendung zum Herstellen von katalytisch und/oder photokatalytisch aktiven Oberflächen nicht wie hierin beschrieben einer Grundzusammensetzung beigemischt, vielmehr wird sie auf ein entsprechendes Keramik- oder Glassubstrat oder einem glasierten, engobierten oder emaillierten Substrat aufgebracht. Dies kann durch Streuauftrag oder Aufblasen erfolgen.

Die Verwendung in dieser Ausgestaltung kann individuell und in Abhängigkeit von den Erfordernissen oder technischen Einrichtungen sehr flexibel in bestehende Verfahren integriert werden. Grundsätzlich immer möglich ist beispielsweise ein Aufbringen auf das Substrat, wenn dieses eine Temperatur im Bereich von 600 °c bis 1350 °C aufweist, weil dann umgehend die entsprechenden Schmelzphasen- und/oder Sinterreaktionen eintreten und normalerweise kein zusätzlicher Energieeintrag erforderlich ist. Andererseits ist es ohne Einschränkungen auch möglich die Zusammensetzung in der Form zu verwenden, dass ein Aufbringen beispielsweise bei Raumtemperatur erfolgt und nachfolgend ein entsprechendes Erwärmen. Hier wäre ein keramischer Grünling zu nennen, auf den die modifizierende Zusammensetzung vor dem keramischen Brand aufgebracht wird.

Allgemein und unabhängig von der gewählten Ausgestaltung der vorliegenden Erfindung kann die modifizierende Zusammensetzung trocken, als Pulver oder in Form einer Aufschlämmung verwendet werden. Sofern die Verwendung als Aufschlämmung erfolgt, ist bevorzugt eine wässrige und/oder alkoholische Aufschlämmung zu verwenden, weil dies geringe Kosten verursacht und Wasser und/oder Alkohol unter den Verfahrensbedingungen problemlos abdampfen oder im Verfahren entfernt werden.

In einer besonderen, eigenständigen Ausführungsform der vorliegenden Erfindung erfolgt die Verwendung der genannten Verbindungen oder Zusammensetzungen indem ein entsprechendes Pulver als solches oder in Form einer Aufschlämmung auf ein ein Substrat aufgebracht und darauf nachfolgend, gegebenenfalls nach einem kurzen Trocknen oder Antrocknen, eine Aufschlämmung zum Herstellen einer Glasur, Engobe, Druckfarbe oder Emaille. Dabei ist es vorteilhaft, wenn die wenigstens eine erfindungsgemäß eingesetzte Verbindung oder einer ausgehend von diesen hergestellte feste Zusammensetzung zum Erzeugen katalytisch aktiver Oberflächen ferner wenigstens ein anorganisches und/oder organisches Bindemittel aufweist, um so die Haftung an der Substratoberfläche zu verbessern.

In einer unabhängigen Weiterbildung der vorliegenden Erfindung enthält die Zusammensetzung für die Verwendung zum Herstellen katalytisch und/oder photokatalytisch aktiver Oberflächen somit wenigstens ein anorganisches und/oder organisches Bindemittel, wobei die Verwendung eines anorganischen und/oder organischen Bindemittels aus der Li-, Na-, K-Wasserglas, Tetraethylorthosilikat, Kieselsol, pyrogene Kieselsäure, Carboxymethylcellulose, Polyacrylat, Dextrine, Bentonite, Kondensationssilikone, Natriumphosphate und Kieselsäure/Natriumsalz umfassenden Gruppe aufgrund deren Verfügbarkeit und guten Verarbeitbarkeit bevorzugt ist.

Das Bindemittel kann im Rahmen der vorliegenden Erfindung neben der bereits erwähnten weitere, unterschiedliche Funktionen erfüllen. Beispielsweise kann es aufgrund des Quellverhaltens die thixotropen Eigenschaften der Aufschlämmung oder einer mit der Zusammensetzung modifizierten Grundzusammensetzung verändern. Andererseits kann das Bindemittel als Si-Quelle und/oder Flussmittel dienen, ein Anhaften der Zusammensetzung an der Oberfläche unterstützen, ein Eindiffundieren von Bestandteilen einer Aufschlämmung in ein Substrat zumindest verringern oder auch das Trocknungsverhalten beschleunigen bzw. die Wasseraufnahme verringern.

In einer unabhängigen Weiterbildung der Verwendung der wenigstens einen erfingungsgemäß eingesetzten Verbindung oder Zusammensetzung in Form einer Aufschlämmung enthält die Aufschlämmung oder Suspension eine wässrige und/oder alkoholische Lösung mit wenigstens einem Mitglied der Ti, Zn, Cu, Sn, B, Al, Si, Mn, Fe, Co, Ni, Sr, Y, Zr, Ag, Li, Ba, Lanthanoiden, Li-, Na-, K-Wasserglas und Verdickungsmittel umfassenden Gruppe und erlaubt somit auf einfache Weise eine Anpassung an das mit einer katalytisch und/oder photokatalytisch aktiven Oberfläche auszurüstendem Substrat oder hinsichtlich der erzielbaren Eigenschaften. So kann auf einfache Weise ein Eintrag von zum antimikrobiell Wirksamen Elementen zum Erzeugen entsprechender Oberflächeneigenschaften oder ein dotieren mit Elementen zum Steuern der katalytischen Aktivität hinsichtlich des Abbaus von Stickoxiden, einschließlich NO, und NO₂, zusammenfassend als NOₓ bezeichnet, anderer Schadstoffe wie beispielsweise Methan, Formaldehyd, Acetaldehyd, aromatische Kohlenwasserstoffe wie Toluol, CO und geruchsintensive Verbindungen wie Schwefelverbindungen erfolgen,die nach ersten qualitativen Untersuchungen ebenfalls von den aufgrund der erfindungsgemäßen Verwendung erzeugten katalytisch und/oder photokatalytisch aktiven Oberflächen zersetzt werden.

Unabhängig davon ist es auch möglich eine wie hierein beschrieben modifizierte Grundzusammensetzung oder ein entsprechend mit einer erfindungsgemäßen, festen Zusammensetzung modifiziertes Substrat nachfolgend mit einer wässrigen und/oder alkoholischen Lösung mit wenigstens einem Mitglied der Ti, Zn, Cu, Sn, B, Al, Si, Mn, Fe, Co, Ni, Sr, Y, Zr, Ag, Li, Ba, Lanthanoiden, Li-, Na-, K-Wasserglas und Verdickungsmittel umfassenden Gruppe durch Sprühen, Schütten, Drucken oder auf eine andere in der DE 10 2019 006 135 offenbarten Applikationsmöglichkeiten zu behandeln.

Zusätzlich zu den bereits beschriebenen Ausgestaltungen der vorliegenden Erfindung kann eine auf einem anorganischen und/oder organischen Bindemittel basierende Sperrschicht auf einem Substrat vor dem Aufbringen der wenigstens einen erfindungsgemäß eingesetzten Verbindung oder einer ausgehend von diesen hergestellten festen Zusammensetzung vorgesehen werden, insbesondere um ein Eindiffundieren von löslichen Teilen in das Substrat zu verringern oder vollständig zu verhindern. Hierfür werden die bereits hierin offenbarten anorganischen und organischen Bindemittel eingesetzt, wobei die anorganischen Bindemittel wie Wasserglas, Tetraethylorthosilikat, Kieselsol oder pyrogene Kieselsäure allgemein zu einer Verkieselung der Substratoberfläche und damit zu einer Anreicherung von Si an dieser führen, während sich organische Bindemittel wie Carboxymethylcellulose, Polyvinylakohohl, Dextrine, Peptatone, Kondensationssilikone, Natriumphosphate, Kieselsäure/Natriumsalz und Polyacrylat unter den Verfahrensbedingungen gewöhnlich rückstandslos zersetzen.

Eine weitere Möglichkeit besteht darin, wenigstens eine Verbindung aus der Gruppe eines Titan enthaltenden Minerals, eines festen Titanats, Ti-Silikats, Zirkonats, Zirkonsilikats, Aluminiumtitanats, Zirkontitanats und Zirkonalumotitanats oder einer ausgehend von diesen hergestellten festen Zusammensetzung unter Zugabe eines anorganischen und/oder organischen Bindemittels vor der Verwendung aufzuschlämmen und dann auf ein Substrat aufzubringen oder in eine Grundzusammensetzung einzuarbeiten.

Zu beachten ist, das die Zusammensetzung der Glasur ebenfalls genutzt werden kann um durch Zugabe von wenigstens einer Verbindung aus der Gruppe eines Titan enthaltenden Minerals, eines festen Titanats, Ti-Silikats, Zirkonats, Zirkonsilikats, Aluminiumtitanats, Zirkontitanats und Zirkonalumotitanats oder einer ausgehend von diesen hergestellten Zusammensetzung oder Mischung derselben gezielt Kristalle zu bilden. Dabei wird durch Zugabe der Modifikation die vorhandenen Elemente genutzt bzw. ergänzt um in der Schmelzphase die gewünschten Strukturen zu bilden.

Zur weiteren Erläuterung und zum besseren Verständnis der Erfindung wird nachfolgend selbige nochmals ausführlich und unter Angabe von Ausführungbeispielen erläutert. Eine schwarze Glasurzusammensetzung, die nach dem abschließenden Glasurbrand eine opak und glänzende Glasur ergibt, wird auf verschiedene Weise modifiziert und ausgewählte Proben dieser modifizierten Glasuren werden hinsichtlich ihrer photokatalytische Aktivität untersucht.

Bei sämtlichen der nachfolgend angegebenen Angaben der Anteile der Bestandteile handelt es sich grundsätzlich um Angaben als Massenprozent, es sei denn es ist ausdrücklich anders angegeben.

Eine allgemeine Zusammensetzung für die genannte schwarze Glasur ist folgende:

| | |
|---|---|
| SiO₂ | 39,83% |
| Al₂O₃ | 12,93% |
| Na₂O | 1,96% |
| K₂O | 0,71% |
| CaO | 5,66% |
| MgO | 0,35% |
| B₂O₃ | 12,71 % |
| Fe₂O₃ | 15,27% |
| MnO₂ | 10,58 % |

Die Glasur wird allgemein 1:2 bis 1:3 mit Anmachwasser für 4 Stunden gerührt, was in der fertigen, nicht modifizierten Glasuraufschlämmung einem Anteil von 31,25 % der Glasurzusammensetzung und 68,75 % an demineralisiertem Wasser entspricht.

Zu dieser Glasurzusammensetzung werden dann nacheinander die in den Beispielenangegebenen Zusammensetzungen und Bestandteile in der aufgeführten Reihenfolge gegeben und vermischt. Die Anteilsangaben beziehen sich jeweils auf die fertige, modifizierte Glasuraufschlämmung. Es wurde dort, wo möglich immer der gleiche Ablauf eingehalten um vergleichbare Verfahrensbedingungen sicherzustellen und Fehler möglichst zu vermeiden. Grundsätzlich kann die Reihenfolge und die Art, Anzahl und Menge der zugesetzten Substanzen aber variiert werden. Dies ist den Beispielen zu entnehmen.

In einigen Beispielen ist das Anmachwasser für die Glasurzusammensetzung durch ein Liquid mit bereits gelösten Verbindungen ersetzt. Die Zusammensetzung für das jeweils eingesetzte Liquid ist in den entsprechenden Beispielen angegeben.

Auch ist es möglich lösliche Feststoffe oder Salze, aber auch unlösliche Carbonate und/oder Sulfate einzusetzen. Dies ist optional und entsprechende Anteile sind ebenfalls angegeben. Wasser wird ausschließlich in Form von demineralisiertem Wasser eingesetzt.

Die fertige, modifizierte Glasuraufschlämmung wird dann wie aus dem Stand der Technik bekannt auf ein Substrat aufgebracht, zum Beispiel auf einen keramischen Grünling, getrocknet und gebrannt. Eine Referenzprobe mit der oben angegebenen Glasuraufschlämmung wird auf gleiche Weise hergestellt.

### Beispiel 1:

Zu 61,181 % eines Liquids, das auf die Gesamtmenge der modifizierten Glasuraufschlämmung folgende Bestandteile enthält:

| | |
|---|---|
| Wasser | 60,820 % |
| Salpetersäure | 0,003 % |
| Titan(IV)-isopropoxid | 0,052 % |
| Salzsäure | 0,001 % |
| Zinkchlorid | 0,027 % |
| Kupferchlorid | 0,002 % |
| Zinnchlorid | 0,004 % |
| LWG (Lithiumwasserglas) | 0,266 % |
| Triisopropylborat | 0,006 % |

werden als löslicher Feststoff 4,388 % Borsäure gegeben, 30,469 % der angegebenen Glasurzusammensetzung und dann, ebenfalls als löslicher Feststoff oder Salz jeweils 0,731 % Eisenchlorid und Nockelchlorid, gefolgt von 2,500 % Strontiumtitanat.

### Beispiel 2:

Bis auf das verwendete Titanat wurden die gleichen Mengen und die selben Verbindungen wie in 1 eingesetzt. Als Titanat wurden 2,500 % Bariumtitanat verwendet.

Entsprechend wurde in den weiteren en Verfahren, weshalb nachfolgend nur die Anteile der einzelnen Bestandteile oder Zusammensetzungen angegeben sind.

### Beispiel 3:

| | |
|---|---|
| Liquid: (62,750%) | |
| Wasser | 62,381% |
| Salpetersäure | 0,003% |
| Titan(IV)-isopropoxid | 0,053% |
| Salzsäure | 0,001% |
| Zinkchlorid | 0,028% |
| Kupferchlorid | 0,002% |
| Zinnchlorid | 0,004% |
| LWG (Lithiumwasserglas) | 0,274% |
| Triisopropylborat | 0,006% |
| lösliche Feststoffe/Salze | |
| Borsäure | 4,500% |
| Glasurzusammensetzung: lösliche Feststoffe/Salze | (31,250%) |
| Eisenchlorid | 0,750% |
| Nickelchlorid Titanate: | 0,750% |
| Strontiumtitanat | 1,250% |
| Bariumtitanat | 1,250% |

### Beispiel 4:

| | |
|---|---|
| Liquid: (61,800%) | |
| Wasser | 61,329% |
| Salpetersäure | 0,003% |
| Titan (IV)-isopropoxid | 0,053% |
| Salzsäure | 0,001% |
| Zinkchlorid | 0,028% |
| Kupferchlorid | 0,002% |
| Zinnchlorid | 0,004% |
| LWG (Lithiumwasserglas) | 0,374% |
| Triisopropylborat | 0,006% |
| Unlösliche Feststoffe/Salze | |
| Bariumcarbonat | 3,000% |
| GlasurZusammenasetzung: | (31,250%) |
| lösliche Feststoffe/Salze | |
| Eisenchlorid | 1,000% |
| Nickelchlorid | 1,000% |
| Titanate: | |
| Bariumtitanat | 1,950% |

### Beispiel 5:

| | |
|---|---|
| Liquid: (62,561%) | |
| Wasser | 62.192% |
| Salpetersäure | 0,003% |
| Titan(IV)-isopropoxid | 0,053% |
| Salzsäure | 0,001% |
| Zinkchlorid | 0,028% |
| Kupferchlorid | 0,002% |
| Zinnchlorid | 0,004% |
| LWG (Lithiumwasserglas) | 0,272% |
| Triisopropylborat | 0,006% |
| lösliche Feststoffe/Salze | |
| Borsäure | 4,500% |
| Glasurzusammensetzung: | (31,157%) |
| lösliche Feststoffe/Salze | |
| Eisenchlorid | 0,741% |
| Nickelchlorid | 0,741% |
| Titanate: | |
| Cobalttitanat | 0,300% |

### Beispiel 6:

| | |
|---|---|
| Liquid: (58,044%) | |
| Wasser | 57.701% |
| Salpetersäure | 0,003% |
| Titan(IV)-isopropoxid | 0,049% |
| Salzsäure | 0,001% |
| Zinkchlorid | 0,026% |
| Kupferchlorid | 0,002% |
| Zinnchlorid | 0,004% |
| LWG (Lithiumwasserglas) | 0,252% |
| Triisopropylborat | 0,006% |
| lösliche Feststoffe/Salze | |
| Borsäure | 4,163% |
| Glasurzusammensetzung: | (28,905%) |
| lösliche Feststoffe/Salze | |
| Eisenchlorid | 0,694% |
| Nickelchlorid | 0,694% |
| Titanate: | |
| Aluminiumtitanat | 7,500% |

### Beispiel 7:

| | |
|---|---|
| Liquid: (56,475%) | |
| Wasser | 56.142% |
| Salpetersäure | 0,003% |
| Titan (IV)-isopropoxid | 0,047% |
| Salzsäure | 0,001% |
| Zinkchlorid | 0,025% |
| Kupferchlorid | 0,002% |
| Zinnchlorid | 0,004% |
| LWG (Lithiumwasserglas) | 0,246% |
| Triisopropylborat | 0,005% |
| lösliche Feststoffe/Salze | |
| Borsäure | 4,050% |
| Glasurzusammensetzung: | (28,125%) |
| lösliche Feststoffe/Salze | |
| Eisenchlorid | 0,675% |
| Nickelchlorid | 0,675% |
| Titanate: | |
| Bariumtitanat | 7,500% |
| Cobalttitanat | 2,500% |

### Beispiel 8:

| | |
|---|---|
| Wasser | 68,150% |
| Glasurzusammensetzung: | (31,250%) |
| Titanate | |
| Bariumtitanat | 0.600% |

### Beispiel 9:

| | |
|---|---|
| Wasser | 67,350% |
| Glasurzusammensetzung: Titanate | (31,250%) |
| Strontiumtitanat | 0.800% |
| Magnesiumtitanat | 0,600% |

### Beispiel 10

| | |
|---|---|
| Liquid: (65,569%) | |
| Wasser | 65.208% |
| Salpetersäure | 0,003% |
| Titan(IV)-isopropoxid | 0,052% |
| Salzsäure | 0,001% |
| Zinkchlorid | 0,027% |
| Kupferchlorid | 0,002% |
| Zinnchlorid | 0,004% |
| LWG (Lithiumwasserglas) | 0,266% |
| Triisopropylborat | 0,006% |
| Glasurzusammensetzung: | (30,469%) |
| lösliche Feststoffe/Salze | |
| Eisenchlorid | 0,731% |
| Nickelchlorid | 0,731% |
| Titanate: | |
| Bariumtitanat | 2,500% |

### Beispiel 11:

| | |
|---|---|
| Liquid: (67,069%) | |
| Wasser | 66.708% |
| Salpetersäure | 0,003% |
| Titan (IV)-isopropoxid | 0,052% |
| Salzsäure | 0,001% |
| Zinkchlorid | 0,027% |
| Kupferchlorid | 0,002% |
| Zinnchlorid | 0,004% |
| LWG (Lithiumwasserglas) | 0,266% |
| Tri isopropyl borat | 0,006% |
| Glasurzusammensetzung : | (30,469%) |
| lösliche Feststoffe/Salze | |
| Eisenchlorid | 0,731% |
| Nickelchlorid | 0,731% |
| Titanate: | |
| Strontiumtitanat | 1,000% |

### Beispiel 12:

| | |
|---|---|
| Wasser | 67,031% |
| Glasurzusammensetzung: | (30,469%) |
| Titanate: | |
| Bariumtitanat | 2,500% |

### Beispiel 13:

| | |
|---|---|
| Liquid: (62,302%) | |
| Wasser | 61.935% |
| Salpetersäure | 0,003% |
| Titan(IV)-isopropoxid | 0,052% |
| Salzsäure | 0,001% |
| Zinkchlorid | 0,027% |
| Kupferchlorid | 0,002% |
| Zinnchlorid | 0,004% |
| LWG (Lithiumwasserglas) | 0,272% |
| Triisopropylborat | 0,006% |
| lösliche Feststoffe/Salze | |
| Borsäure | 4,482% |
| Eisenchlorid | 0,746% |
| Nickelchlorid | 0,746% |
| Glasurzusammensetzung: | (31,124%) |
| Titanate: | |
| Bariumtitanat | 0,600% |

### Beispiel 14:

| | |
|---|---|
| Liquid: (67,031%) | |
| Wasser | 66,964% |
| Salpetersäure | 0,003% |
| Titan(IV)-isopropoxid | 0,057% |
| Salzsäure | 0,001% |
| Triisopropylborat | 0,006% |
| Glasurzusammensetzung: | (30,469%) |
| Titanate: | |
| Bariumtitanat | 2,500% |

### Beispiel 15:

| | |
|---|---|
| Liquid: (65,863%) | |
| Wasser | 65,803% |
| Salpetersäure | 0,003% |
| Titan (IV)-isopropoxid | 0,056% |
| Salzsäure | 0,001% |
| Glasurzusammensetzung: | (29,937%) |
| Titanate (natürliches Mineral) | |
| Ilmenit | 4,200% |

### Beispiel 16 :

| | |
|---|---|
| Wasser | 68,531% |
| Glasurzusammensetzung: | (30,469%) |
| Titanate: | |
| Titansilikat | 1,000% |

### Beispiel 17:

| | |
|---|---|
| Wasser | 68,750% |
| Glasurzusammensetzung: | (29,250%) |
| Titanate: | |
| Ilmenit | 2,000% |

### Beispiel 18:

| | |
|---|---|
| Wasser | 66,850% |
| lösliche Feststoffe/Salze | |
| Bariumchlorid | 1,900% |
| Glasurzusammensetzung: | (30,000%) |
| Titanate: | |
| Ilmenit | 1,250% |

### Beispiel 19:

| | |
|---|---|
| Wasser | 67,25% |
| lösliche Feststoffe/Salze | |
| Eisenchlorid | 0,750% |
| Nickelchlorid | 0,750% |
| Glasurzusammensetzung: | (29,500%) |
| Titanate: | |
| Bariumtitanat | 1,750% |

### Beispiel 20:

| | |
|---|---|
| Liquid: (68,75%) | |
| Wasser | 68.349% |
| Salpetersäure | 0,003% |
| Titan (IV)-isopropoxid | 0,058% |
| Salzsäure | 0,001% |
| Zinkchlorid | 0,030% |
| Kupferchlorid | 0,002% |
| Zinnchlorid | 0,004% |
| LWG (Lithiumwasserglas) | 0,300% |
| Tri isopropyl borat | 0,006% |
| Glasurzusammensetzung : Titanate: | (27,650%) |
| Bariumtitanat | 3,000% |
| Siliziumdioxid | 0,600% |

### Beispiel 21:

| | |
|---|---|
| Liquid: (67,050%) | |
| Wasser | 66,646% |
| Salpetersäure | 0,003% |
| Titan (IV)-isopropoxid | 0,058% |
| Salzsäure | 0,001% |
| Zinkchlorid | 0,030% |
| Kupferchlorid | 0,002% |
| Zinnchlorid | 0,004% |
| LWG (Lithiumwasserglas) | 0,300% |
| Tri isopropyl borat | 0,006% |
| Glasurzusammensetzung: | (30,420%) |
| Oxide und unlösliche Salze | |
| Siliziumdioxid | 0,830% |
| Bariumcarbonat | 0,500% |
| Sabinait | 1,200% (Natrium-Zirconium-Titan-Carbonat) |

### Beispiel 22:

| | |
|---|---|
| Wasser | 67,75% |
| Glasurzusammensetzung: | (27,250%) |
| Titanate und Oxide: | |
| Siliziumdioxid | 0,600% |
| Titansilikat | 4,400% |

### Beispiel 23:

| | |
|---|---|
| Wasser | 67,75% |
| Glasurzusammensetzung: | (28,850%) |
| Titanate und Oxide: | |
| Ilmenit | 2,500% |
| Bariumcarbonat | 0,900% |

Das mit der nicht modifizierten Glasurzusammensetzung hergestellte Vergleichsbeispiel (Referenz) sowie mit ausgewählten und in Tabelle 1 angegebenen Beispielen hergestellte Proben wurden dann hinsichtlich ihrer photokatalytischen Aktivität bezüglich des NOₓ-Abbaus wie folgt untersucht:
Dazu wird die Probe wird in einen Reaktor gelegt und dieser luftdicht verschraubt.

Die Reaktorkammer wird mit Stickstoff geflutet bis der Sauerstoffgehalt weniger als 1% und die Luftfeuchtigkeit weniger als 15% beträgt.

Das NO-Gas wird nun eingeleitet und kontinuierlich gemessen bis sich eine stabile Atmosphäre mit 100 ppm NO (+/- 5%), 0% Sauerstoffgehalt und 10% Luftfeuchtigkeit eingestellt hat.

Es erfolgt eine Dunkelmessung von 30 min, um eine Homogenisierung des geschlossenen Systems zu ermöglichen.

Es erfolgt die Belichtungsphase von 4 h und 30 min.

Anschließend wird mit einem Abgasanalysegerät der NO-Gehalt gemessen und aufgezeichnet.

Es wurde mit folgenden Versuchsparametern gearbeitet:
Reaktor mit 4000 mL Volumen; kontinuierliche Umwälzung der Luft durch Lüfter
- Prüfgas 100 ppm NO in Stickstoff
- Probengröße 20 cm x 10 cm
- Lichtquelle UV-A Lampe Max. λ = 362 nm; Weitere λ bei 405, 435, 545, 580 nm
- Lichtstärke 40W/m²
- Luftfeuchtigkeit 10%
- Sauerstoffgehalt: Start 0%; Ende ca. 1,5%
- Messdauer Dunkel 30 min; UV 4 h 30 min
- Messgerät Testo 340

Die Ergebnisse dieser Untersuchungen sind in Tabelle 1 wiedergegeben, wobei die unerwartete Wirksamkeit der erfindungsgemäßen Verwendung der eingesetzten Titanate in den unterschiedlichsten Ausführungsformen und mit verschiedenen Verbindungen durch diese Untersuchungen eindeutig belegt ist.

**Tabelle 1:**

| **Probe** | **NO-Wert Start in ppm** | **NO-Wert Ende in ppm** | **Abbau NO in %** | **Δ vgl. leere Kammer** | **Δ vgl. Referenz** |
|---|---|---|---|---|---|
| | | | | | |
| **leere Kammer** | 103 | 74 | 28,2 | - | 2,2 bzw 1,9 |
| | | | | | |
| **Referenz** | 102 | 71 | 30,4 | 2.2 | - |
| | | | | | |
| Bsp. 2 | 102 | 64 | 37,3 | 9,1 | 6.9 |
| | | | | | |
| Bsp. 12 | 100 | 63 | 37.0 | 9.0 | 6.8 |
| | | | | | |
| Bsp. 13 | 101 | 65 | 35,6 | 7,4 | 5,2 |
| | | | | | |
| Bsp. 14 | 104 | 63 | 39.4 | 11,2 | 9.0 |
| | | | | | |
| Bsp. 15 | 100 | 59 | 41.0 | 12,8 | 10.6 |
| | | | | | |
| Bsp. 16 | 105 | 64 | 39.0 | 10.8 | 8,6 |
| | | | | | |
| Bsp. 17 | 102 | 63 | 38.2 | 10.0 | 7.8 |
| | | | | | |
| Bsp. 18 | 103 | 62 | 39.8 | 11.6 | 9.4 |
| | | | | | |
| Bsp. 19 | 102 | 62 | 39,2 | 11.0 | 8.8 |
| | | | | | |
| Bsp.20 | 101 | 62 | 38,6 | 10.4 | 8.2 |
| | | | | | |
| Bsp.21 | 102 | 64 | 37,3 | 9,1 | 6,8 |
| | | | | | |
| Bsp. 22 | 105 | 66 | 37,1 | 8,9 | 6,7 |
| | | | | | |
| Bsp. 23 | 104 | 60 | 42.3 | 14.1 | 11.9 |
| | | | | | |
| **Referenz ohne Glasur** | 103 | 72 | 30,1 | 1,9 | - |
| | | | | | |
| Bsp. 24 | 101 | 62 | 38,6 | 10,4 | 8,2 |
| | | | | | |
| Bsp. 25 | 105 | 62 | 41,0 | 12,8 | 10,6 |

| | | | | | |
|---|---|---|---|---|---|
| Bsp.: Beispiel Leere Kammer: Kammer gemessen ohne Probe Referenz: Dachziegel mit Glasur ohne Modifikation Referenz ohne Glasur: gebranntes Feinsteinzeug ohne Glasur | | | | | |

### Ergebnisse Photokatalyse:

| **Probe** | **Photokatalyse** |
|---|---|
| Referenz | 0,0% |
| Beispiel 2 | 3,8% |
| Beispiel 7 | 4,5% |
| Beispiel 8 | 3,5% |
| Beispiel 13 | 3,5% |
| Beispiel 15 | 2,8% |
| Beispiel 16 | 4,1% |
| Beispiel 18 | 5,0% |
| Beispiel 20 | 5,5% |
| Beispiel 23 | 4,8% |
| Referenz Grünling | 0,0% |
| Beispiel 24 (Grünling) | 3,9% |
| Beispiel 25 (Grünling) | 4,7% |

### Photokatalyse geprüft in Anlehnung an die ISO-Norm:

ISO 10678 Fine ceramics (advanced ceramics, advanced technical ceramics) - Determination of photocatalytic activity of surfaces in an aqueous medium by degradation of methylene blue

### Der als Referenz genommene Feinsteinzeuggrünling ohne Glasur besaß folgende Zusammensetzung:

40% Wasser
Rohstoffe (60%):

| | |
|---|---|
| Kaolin | 21,600% |
| Sedimentton | 15,900% |
| Quarz | 7,500% |
| Schamotte | 7,500% |
| Talk | 6,000% |
| Feldspat | 1,500% |

Der Grünling wird anschließend nach bekannten Parametern und Ofenkurve gebrannt. 1150°C für 300 min.

Bei den folgenden Beispielen wird das Wasser durch folgende Lösung ersetzt, um die photoaktalytische bzw. katalytische Aktivität zu erhalten.

### Beispiel 24:

| | |
|---|---|
| Rohstoffe (60%): | |
| Kaolin | 21,600% |
| Sedimentton | 15,900% |
| Quarz | 7,500% |
| Schamotte | 7,500% |
| Talk | 6,000% |
| Feldspat | 1,500% |
| Liquid(40%) | |
| Wasser | 32,46% |
| Eisensulfat | 1,240% |
| Bariumsulfat | 1,300% |
| Bariumtitanat | 5,000% |

### Beispiel 25:

| | |
|---|---|
| Rohstoffe (60%): | |
| Kaolin | 21,600% |
| Sedimentton | 15,900% |
| Quarz | 7,500% |
| Schamotte | 7,500% |
| Talk | 6,000% |
| Feldspat | 1,500% |
| Liquid: (40,000%) | |
| Wasser | 34,030% |
| Salpetersäure | 0,030% |
| Titan(IV)-isopropoxid | 0,570% |
| Salzsäure | 0,010% |
| Tri isopropyl borat | 0,060% |
| Lösliche Salze: | |
| Bariumchlorid | 0,500% |

| | |
|---|---|
| Titanate und unlösliche Salze: | |
| FeTiO₃ | 4,000% |
| Bariumcarbonat | 0,800% |

Wie hierin bereits erwähnt, wurde die Proben zumindest teilweise mittels EBSD-Analyse ausgewertet. Dabei wurden auch rasterelektronenmikroskopische Aufnahmen erstellt, die die Erfindung eindrucksvoll veranschaulichen: Es zeigen:
- **Fig. 1**: eine SEM-Aufnahme der Oberfläche des Referenzbeispiels,
- **Fig. 2**: eine Aufnahme der Oberfläche von Beispiel 2,
- **Fig. 3**: eine Aufnahme der Oberfläche von Beispiel 3,
- **Fig. 4**: eine Aufnahme der Oberfläche von Beispiel 8,
- **Fig. 5**: eine Aufnahme der Oberfläche von Beispiel 10
- **Fig. 6**: eine Aufnahme der Oberfläche von Beispiel 12,
- **Fig. 7**: eine Aufnahme der Oberfläche von Beispiel 13
- **Fig. 8**: eine Aufnahme der Oberfläche von Beispiel 14,
- **Fig. 9**: eine Aufnahme der Oberfläche von Beispiel 15,
- **Fig. 10**: eine Aufnahme der Oberfläche von Beispiel 16,
- **Fig. 11**: eine Aufnahme der Oberfläche von Beispiel 17,
- **Fig. 12**: eine Aufnahme der Oberfläche von Beispiel 19,
- **Fig. 13**: eine Aufnahme der Oberfläche von Beispiel 23,
- **Fig. 14**: eine Aufnahme der Oberfläche des als Referenzbeispiel verwendeten Feinsteinzeugs ohne Glasur und
- **Fig. 15**: eine Aufnahme der Oberfläche von Beispiel 25.

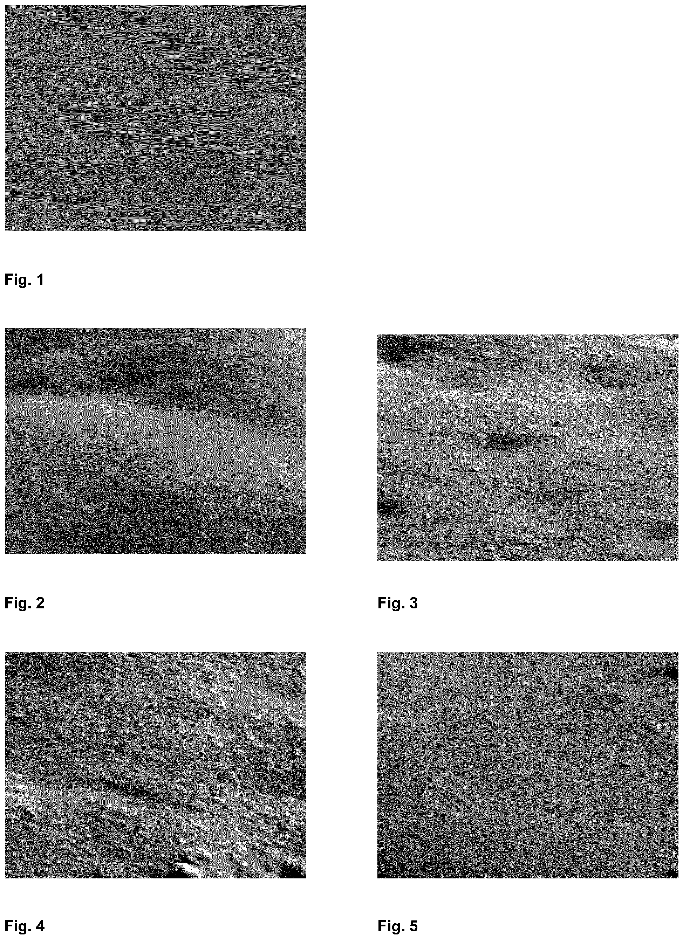

Die Oberfläche des in Fig. 1 abgebildeten Referenzbeispiels mit einer nicht modifizierten Glasur nach dem Stand der Technik ist erkennbar und wie zu erwarten glatt und ansonsten nicht weiter bemerkenswert.

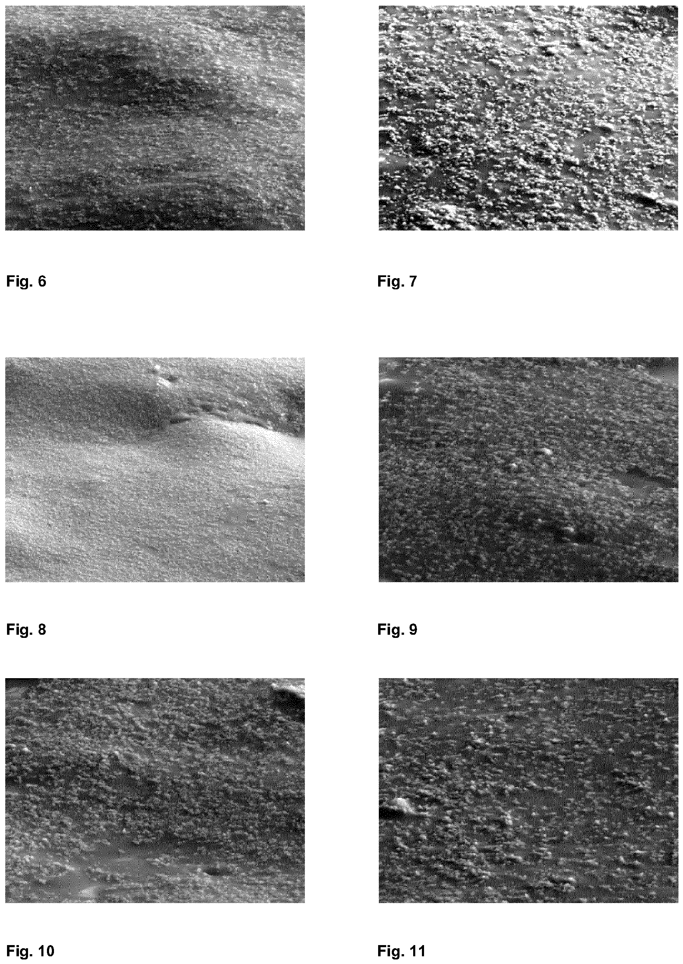

Die in den Fig. 2 bis 13 abgebildeten Oberflächen der erfindungsgemäß modifizierten Glasuren zeigen sämtlich ganz deutlich kristalline Strukturen, die mittels EBSD-Analyse als die komplexen oxidischen und komplexe Titanoxide nachgewiesen wurden, die in der Beschreibung erwähnt sind. Hierbei handelt es sich erkennbar um hochkristalline Strukturen, die offensichtlich die katalytische und/oder photokatalytische Aktivität aufweisen.

Es ist ferner auffällig, dass diese Strukturen, wenn sie auch von unterschiedlicher Gestalt und Ausprägung sind, mit einer hohen Regelmäßigkeit über die Oberfläche verteilt sind. Gleichzeitig sind diese Strukturen von so geringer Größe, dass optische Veränderungen der Oberfläche im Vergleich mit der Referenz mit dem bloßen Auge praktisch nicht wahrnehmbar sind.

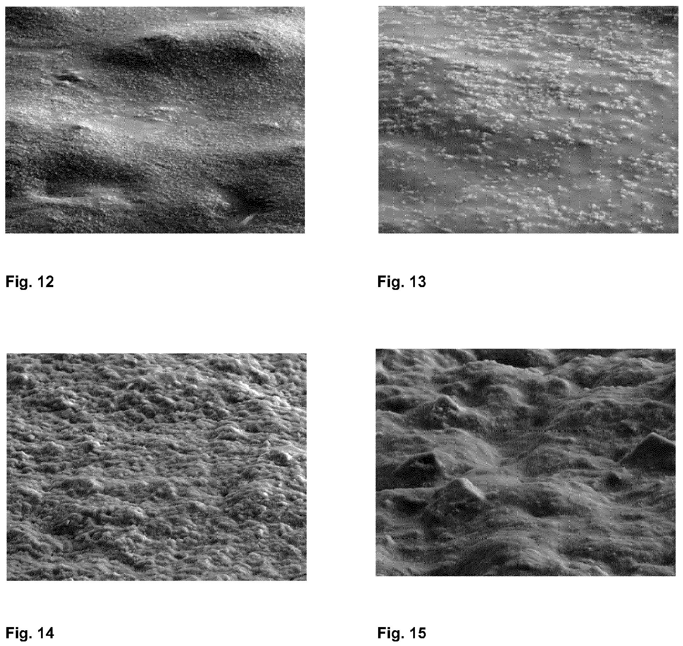

In Fig. 14 ist die raue Oberfläche eines nicht glasierten Feinsteinzeugs zu erkennen, während Fig. 15 ein erfindungsgemäß modifiziertes Feinsteinzeug zeigt. Beide Aufnahmen sind mit der gleichen Vergrößerung angefertigt worden und es ist besonders auffällig, dass es zu vergleichsweise starken strukturellen Veränderungen gekommen ist. Dies ist dem veränderten Schmelz- und/oder Sinterverhalten aufgrund der gewählten Zusätze zuzuschreiben. Gleichwohl kommt es aber auch zu der Bildung komplexer kristalliner, titanhaltiger Oxidstrukturen, die als pyramidenförmige Spitzen in Figur. 15 erkennbar sind. In anderen Worten ausgedrückt erkennt man in Fig. 14 eine raue Oberfläche. Durch Zugabe von komplexen Oxiden, Titanate, Zirkonate und Aluminate oder Mischung derselben,d.h. einer Verbindung aus der Gruppe eines Titan enthaltenden Minerals, eines festen Titanats, Ti-Silikats, Zirkonats, Zirkonsilikats, Aluminiumtitanats, Zirkontitanats und Zirkonalumotitanats oder aus diesen gebildeten Zusammensetzungen, wie in Beispiel 25 durchgeführt, ändert sich nach dem Brand die Struktur der Oberfläche. Sie verschmilzt mehr und ist glatter, jedoch bilden sich feine Kristallstrukturen welche deutlicher härter sind und somit die Oberflächenhärte im Vergleich zur unmodifizierten Oberfläche erhöht. Darüber hinaus zeigen die erhaltenen Strukturen wie Zeolithe eine erhöhte Bindungsneigung zu unterschiedlichen Molekülen wie zum O₂, CO, NOₓ, Methan oder Formaldehyd, wodurch photokatalytische Abbauprozesse durch verstärkte Anlagerung solcher Spezies noch verstärkt werden. Zeolithe wirken dabei positiv durch ihre Struktur welche eine erhöhte Aufnahme von gasförmigen Molekülen begünstigt.

## Patentansprüche

1. Verwendung wenigstens einer Verbindung aus der Gruppe eines Titan enthaltenden Minerals, eines festen Titanats, Ti-Silikats, Zirkonats, Zirkonsilikats, Aluminiumtitanats, Zirkontitanats und Zirkonalumotitanats oder einer ausgehend von diesen hergestellten festen Zusammensetzung zum Erzeugen katalytisch aktiver Oberflächen.

2. Verwendung nach Anspruch 1,
**dadurch gekennzeichnet, dass**
das die Verbindung aus der Gruppe, umfassend Erdalkalititanate wie Bariumtitanat (BaTiO₃), Strontiumtitanat (SrTiO₃), Aluminiumtitanat (Al₂TiO₅), Cobalttitanat (CoTiO₃), Eisentitanat (FeTiO₃), Zirkoniumtitanat (ZrTiO₄), Zinktitanat, Nickeltitanat, natürlichen Titanmineralen oder Mischungen derselben ausgewählt ist.

3. Verwendung nach Anspruch 1 oder 2,
**dadurch gekennzeichnet, dass**
das die Verbindung in Form einer entsprechenden Fritte oder einer entsprechenden bariumhaltigen Fritte eingesetzt wird.

4. Verwendung nach einem der Ansprüche 1 bis 3,
**dadurch gekennzeichnet, dass**
die Zusammensetzung ferner wenigstens eine oder mehrere festen, anorganischen Verbindungen mit Elementen aus der B, Mg, Al, Si, Fe, Ni, Cu, Zn, und Lanthanoide, Pentlandit und Olivin umfassenden Gruppe enthält.

5. Verwendung nach einem der vorhergehenden Ansprüche,
**dadurch gekennzeichnet, dass**
die Zusammensetzung ferner wenigstens ein anorganisches und/oder organisches Bindemittel aufweist.

6. Verwendung nach Anspruch 5,
**dadurch gekennzeichnet, dass**
das anorganische und/oder organische Bindemittel aus der Li-, Na-, K-Wasserglas, Kieselsäure, Carboxymethylcellulose, und Bentonit umfassenden Gruppe ausgewählt ist.

7. Zusammensetzung nach einem oder mehreren der Ansprüche 1 bis 6,
**dadurch gekennzeichnet, dass**
die Zusammensetzung in Pulverform vorliegt, insbesondere als fein gemahlenes Pulver mit einer Größe 1 nm bis 500 µm.

8. Zusammensetzung nach einem der Ansprüche 1 bis 5,
**dadurch gekennzeichnet, dass**
die Zusammensetzung als wässrige und/oder alkoholische Aufschlämmung oder Suspension vorliegt.

9. Zusammensetzung nach Anspruch 8,
**dadurch gekennzeichnet, dass**
die Aufschlämmung oder Suspension eine wässrige und/oder alkoholische Lösung mit wenigstens einem Mitglied der Ti, Zn, Cu, Sn, B, Al, Si, Mn, Fe, Co, Ni, Sr, Y, Zr, Ag, Li, Ba, Lanthanoiden, Li-, Na-, K-Wasserglas und Verdickungsmittel umfassenden Gruppe enthält.

10. Verwendung nach Anspruch einem der vorhergehenden Ansprüche,
**dadurch gekennzeichnet, dass**
die Zusammensetzung zu einer Glas-, Ton-, Keramik-, Steinzeug-, Steingut-, Glasur-, Engoben-, Druckfarben- oder Emaillezusammensetzung gegeben, vermischt, aufgeschlämmt, in Produktform gebracht und im Fall einer Glasur-, Engoben oder Emaille-Zusammensetzung auf ein Substrat aufgebracht sowie einer Temperaturbehandlung zum Erzeugen eines Formkörpers, einer Glasur, Engobe oder Emaille unterzogen wird.

11. Verwendung nach einem der Ansprüche 1 bis 9,
**dadurch gekennzeichnet, dass**
die Zusammensetzung auf ein Substrat aufgebracht und gegebenenfalls getrocknet wird.

12. Glas-, Keramik- oder glasiertes, engobiertes oder emailliertes Produkt, erhalten durch Verwendung nach einem der vorhergehenden Ansprüche.

13. Produkt nach Anspruch 12,
**dadurch gekennzeichnet, dass**
es ausgewählt ist aus der Flachglas, Fliesen, Ziegel, Dachziegel, Fassadenplatten und Sanitärkeramik umfassenden Gruppe.
